# EUROPÄISCHE PATENTANMELDUNG

(11) **EP 0 868 944 A1**
(43) Veröffentlichungstag der Anmeldung: **07.10.1998**
(21) Anmeldenummer: 97112222.1
(22) Anmeldetag: 17.07.1997
(51) Int. Cl.: B02C 18/40, B02C 18/06

(54) **Gerät zur Unterstützung der Fliessbewegung von nicht-homogenen Flüssigkeiten**

(30) Priorität: 04.04.1997 DE 19713854
(71) Anmelder: Klingenberg, Thomas, 49377 Vechta (DE); Czwaluk, Andreas, 49377 Vechta (DE)
(72) Erfinder: Klingenberg, Thomas, 49377 Vechta (DE); Czwaluk, Andreas, 49377 Vechta (DE)

(57) **Zusammenfassung**

Gerät zur Unterstützung der Fließbewegung von nicht homogenen Flüssigkeiten oder Gülle in Durchflußleitungen zur Befüllung von Behältern , wobei der Flüssigkeitsstrom in einem geschlossenen Rohrsystem durch ein rotierendes Flügelrad (4) mit Hilfe der Zentrifugalkraft durch einen Lochsiebmantel (3) gedrückt und dabei die Grobstoffe zerkleinert werden wobei, die in dem rotierenden Flügelrad (4) beweglich angebrachten Messer (5) sich selbsttätig nachschleifen.

## Beschreibung

Die Erfindung betrifft ein Gerät zur Unterstützung der Fließbewegung von nicht homogenen Flüssigkeiten oder Gülle zur Befüllung von Güllefässern, zum Umpumpen von einem Behälter in den anderen Behälter, oder anderen Pumpvorgängen, wobei der Flüssigkeits- oder Güllestrom in einem geschlossenen Rohrsystem einem rotierenden Flügelrad 4 zugeführt wird, das durch die Zentrifugalkraft die Flüssigkeit oder Gülle durch einen das Flügelrad 4 umgebenden feststehenden Lochsiebmantel 3 drückt und dabei die Grobstoffe zerkleinert.

Bei den bislang bekannten Pumpen ist bekannt, daß sie nur solche Flüssigkeiten, die eine bestimmte Größe der Verunreinigungsbeimengen nicht überschreiten, zu fördern in der Lage sind ohne dabei Beschädigungen zu erhalten.

Bei bekannten Geräten dieser Art sind wiederholt Mängel festgestellt worden.

Ein Gerät ist bekannt , Akten-Nr 197 10 588.2 , bei dem das rotierende Flügelrad mit fest montierten Messer besetzt ist . Da diese Messer keine nachschärfende Eigenschaften haben ist in kürzester Zeit eine sichere Zerkleinerung nicht mehr zu erreichen.

Der Erfindung liegt die Aufgabe zugrunde, ein Gerät zuschaffen , das ohne die oben angeführten Mängel , die Fließbewegung von nicht homogenen Flüssigkeiten oder Gülle in Durchflußleitungen zur Befüllung von Güllefässern , zum Umpumpen von einem Behälter in den anderen Behälter, oder anderen Pumpvorgängen in der Form ermöglicht, daß ein aufbereiteter konstanter Flüssigkeits- oder Güllestrom den Pumpen zugeführt wird, damit die Saugleistung der Pumpen nicht durch Verstopfungen unterbrochen und eine Beschädigung der Pumpen verhindert wird.

Die Erfindung löst diese Aufgabe ausgehend von einem Gerät zur Unterstützung der Fließbewegung nach dem Oberbegriff des Anspruchs 1 durch die im kennzeichnenden Teil angegebenen Merkmale.

Hinsichtlich weiterer Ausgestaltungen wird auf Anspruch 2- 7 hingewiesen.

Das Gerät zur Unterstützung der Fließbewegung nach der Erfindung ist in einem geschlossenen Rohrsystem einem Pump- oder Saugsystem vorgelagert.

Weitere Einzelheiten und Vorteile ergeben sich aus der nachfolgenden Beschreibung in der in Verbindung mit der Zeichnung die Erfindung näher erläutert wird.

### In den Zeichnungen zeigen

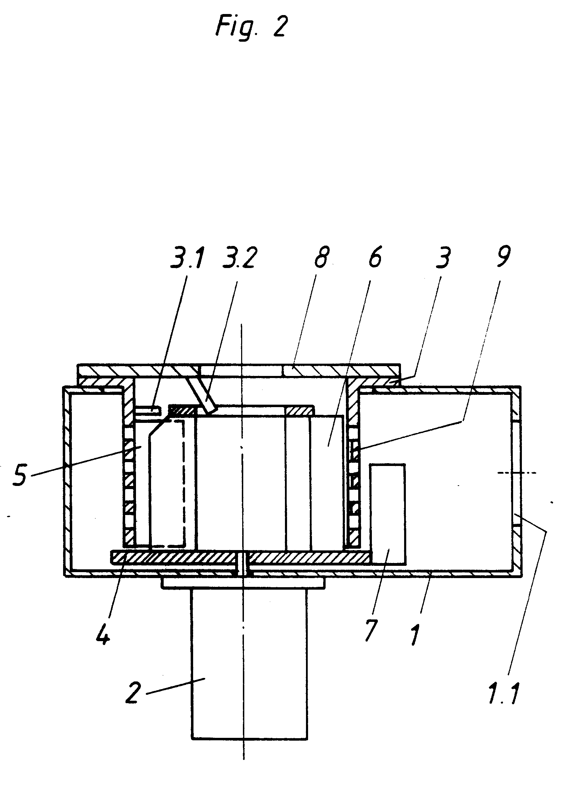

**Fig. 1**
   Perspektivisch vereinfachte Explosionszeichnung eines Gerätes zur Unterstützung der Fließbewegung
**Fig. 2**
   Eine Ansicht im teilweisen Querschnitt
**Fig. 3**
   Draufsicht von Fig. 2 mit einem ovalen Lochsiebmantel
**Fig. 4**
   Draufsicht von Fig. 2 mit einem exzentrisch angeordneten Lochsiebmantel

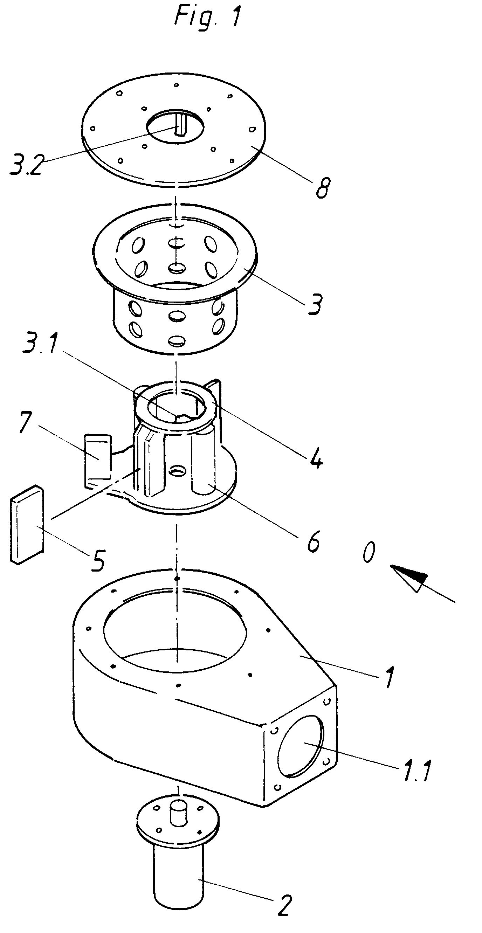

Das in **Fig. 1** und **2** dargestellte Gerät umfasst einen Gehäusemantel 1 mit Antriebsorgan 2, einen feststehenden Lochsiebmantel 3 mit Halteflansch, einen vom Antriebsorgan 2 angetriebenes Flügelrad 4 mit den an den Flügelenden angebrachten beweglichen Messern 5, mit den gegenüberliegenden Quetschflügeln 6 und den an der unteren Platte angebrachten Unterstützungsflügeln 7, sowie einen Abschlußdeckel 8.

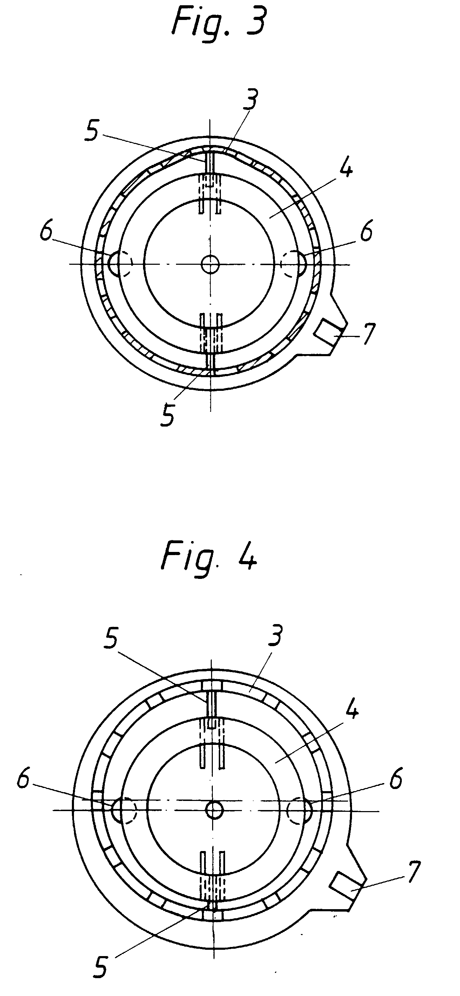

Die in **Fig. 3** dargestellte Drausicht zeigt einen ovalen Lochsiebmantel 3 bei dem die in dem rotierenden Flügelrad 4 beweglichen Messer 5 sich auf den unrunden Ablauf einstellen.

Die in **Fig 4** dargestellte Draufsicht zeigt einen exzentrisch angeordneten Lochsiebmantel 3, bei dem die in dem rotierenden Flügelrad 4 beweglichen Messer 5 sich auf den unrunden Ablauf einstellen.

Das dargestellte Gerät 0 zur Unterstützung der Fließbewegung ist in einem geschlossenen Rohrsystem einem Pump- oder Saugsystem vorgelagert und wird üder eine Gelenkwelle, Transmisssion oder Hydro-Motor angetrieben . Der eintretende Flüssigkeits- oder Güllestrom wird von den rotierenden Flügelrad 4 erfasst, durch die Zentrifugalkraft zum Lochsiebmantel 3 geschleudert, die größeren Verunreinigungsbeimengungen von den beweglichen Messern 5 zerschnitten und von den Quetschflügeln 6 und auch mit Hilfe der Zentrifugalkraft durch den Lochsiebmantel 5 durchgeschleudert.
Der durch den feststehenden Lochsiebmantel 3 durchgeschleuderte Flüssigkeits- oder Güllestrom, mit seinen jetzt zerkleinerten Verunreinigungsbeimengungen, wird mit Hilfe der an der unteren Platte des rotierenden Flügelrades 4 angebrachten Unterstützungsflügeln 7 dem Gehäuseausgang 1.1 und dem weitern Rohrsystem zugeführt .
Bei langfaserigen Verunreinigungsbeimengungen verhindern Abstreifer 3.1 und 3.2 Verwicklungen im rotierenden Flügelrad 4 .
Mit diesem Gerät ist ein schnelles und reibungsloses Befüllen von Güllefässern bei gleichzeitiger Zerkleinerung von Problemgülle wie z. b . Langfaserstoffe von Stroh und Rauhfutter sowie Geflügelfedern, Bindegarn und Holzstückchen möglich.
Durch die Unterstützung der Fließbewegung ist das Befüllen von Vacuumfaßanlagen mit einem höheren Füllgrad zu erreichen.

## Patentansprüche

1. Gerät zur Unterstützung der Fließbewegung von nicht homogenen Flüssigkeiten oder Gülle in Durchflußleitungen zur Befüllung von Güllefässern, zum Umpumpen von einem Behälter in den anderen Behälter, oder anderen Pumpvorgängen, wobei der Flüssigkeits- oder Güllestrom in einem geschlossenen Rohrsystem einem rotierenden Flügelrad (4) zugeführt wird , das durch die Zentrifigalkraft die Flüssigkeit oder Gülle durch einen das Flügelrad (4) umgebenden feststehenden Lochsiebmantel (3) drückt und dabei die Grobstoffe zerkleinert, **dadurch gekennzeichnet**, daß das rotierende Flügelrad (4) exenzentrisch zum feststehenden Lochsiebmantel (3) gelagert oder der feststehende Lochsiebmantel (3) leicht oval geformt ist, sodaß die an den äußeren Flügelenden des rotierenden Flügelrades (4) angebrachten beweglichen Messer (5), die durch die Zentrifugelkraft, eventuell auch durch Federn unterstützt, an der Innenseite des feststehenden Lochsiebmantels (3) mit voller Breite entlangstreifen, in Bewegung bleiben und die Messer (5) dabei sowohl sich selbst wie auch den feststehenden Lochsiebmantel (3) nachschleifen, sodaß immer eine sichere Zerkleinerung der Grobstoffe sowie eine Unterstüzung der Fließbewegung erfolgt.

2. Gerät zur Unterstützung der Fließbewegung nach Anspruch 1, **dadurch gekennzeichnet**, daß eine axiale Zuführung des Flüssigkeits- oder Güllestromes in das rotierende Flügelrad (4) erfolgt.

3. Gerät zur Unterstützung der Fließbewegung nach Anspruch 1 und 2, **dadurch gekennzeichnet**, daß das Gerät sowohl rechts- als linksdrehend, unabhängig von seiner Einbaulage, betrieben werden kann.

4. Gerät zur Unterstützung der Fließbewegung nach Anspruch 1,2 und 3, **dadurch gekennzeichnet**, daß das rotierende Flügelrad (4) mit mindestens einem Quetschflügel (6) ausgerüstet ist.

5. Gerät zur Unterstützung der Fließbewegung nach Anspruch 1, 2, 3 und 4, **dadurch gekennzeichnet,** daß an der Bodenplatte des rotierenden Flügelrades (4) Unterstützungsflügel (7) so angebracht sind , daß sie die durch den Sieblochmantel (3) durchgetretene aufbereitete Flüssigkeit oder Gülle zum Ausgang (1.1) oder in das Rohrsystem fördert.

6. Gerät zur Unterstützung der Fließbewegung nach Anspruch 1, 2, 3, 4 und 5 , **dadurch gekennzeichnet**, daß Abstreifer ( 3.1 + 3.2) Wicklungen an dem rotierenden Flügelrad (4) verhindern.

7. Gerät zur Unterstützung der Fließbewegung nach Anspruch 1, 2, 3, 4, 5 und 6 , **dadurch gekennzeichnet**, daß rillenartige Vertiefungen (9 ) zwischen den Löchern in dem Lochsiebmantel (3) Verbindungen schaffen, die ein Festsetzen von Feststoffen verhindern und gleichzeitig die Selbstschärfung der Messer ( 5) verbessern.
